## Europäisches Patentamt
## European Patent Office
## Office européen des brevets

(11) Publication number: **0 162 231**
**A2**

# EUROPEAN PATENT APPLICATION

(21) Application number: 85103570.9

(22) Date of filing: 26.03.85

(51) Int. Cl.⁴: **G 06 F 3/02**
**G 06 F 3/12, G 06 F 13/24**

(30) Priority: 25.04.84 JP 83271/84

(43) Date of publication of application:
27.11.85 Bulletin 85/48

(84) Designated Contracting States:
DE FR GB NL

(71) Applicant: Ascii Corporation
Sumitomominamiaoyama Bldg. 11-5, Minamiaoyama
5-chome
Minato-ku Tokyo(JP)

(72) Inventor: Ishii, Takatoshi
23-6 Imai 3-Chome
Oome-shi Tokyo(JP)

(72) Inventor: Yamashita, Ryozo
Room 401, Beruwuddoyamato 672, Mizonokuchi
Takatu-ku Kawasaki-shi Kanagawa(JP)

(74) Representative: Lehn, Werner, Dipl.-Ing. et al,
Hoffmann, Eitle & Partner Patentanwälte Arabellastrasse
4 (Sternhaus)
D-8000 München 81(DE)

(54) Multi-function CPU having interface.

(57) A keyboard interface is disclosed which, when a keyboard matrix (23) and an LED driver IC (19) are connected to a multi- function CPU (11), by outputting a scan signal and reading out a return signal through a bus line (17), can reduce the number of pins to its minimum and thus can increase pins having different functions.

A printer interface is also disclosed which, when a printer is connected to a multi-function CPU, with addition of a date register, can increase the functions of the multi-function CPU under the limited number of pins by specifying a level mode or a printer strobe mode.

The keyboard and printer interfaces are respectively capable of expanding the functions of the multi-function CPU (11) further by providing a port for requesting an interrupt as well as a register having an enable bit to inhibit such interrupt.

The interfaces, when the functions of the multi-function CPU are further expanded, are adapted to be controllable systematically so as to prevent confusion by providing within the CPU a port to indicate the ID number of LSIs.

*FIG.2A*

*FIG.2B*

- 1 -

MULTI-FUNCTION CPU HAVING INTERFACE

1.  Field of the Invention

The present invention relates to a multi-function CPU (microprocessor).

2.  Description of the Prior Art

Conventionally, a system such as a terminal device or a personal computer using a microprocessor is composed of a microprocessor (which will be referred to as "CPU" hereinafter) and its adjacent circuits. Recently, thanks to the progress of a semi-conductor technology, parts of the CPU adjacent circuits and the CPU can be combined in a single package, which is now referred to as a "multi-function CPU".

The above-mentioned multi-function CPU can be used effectively in a small-scale system which drives an input/output device directly, but it is not so effective for a large-scale system. In other words, in the large-scale system, because of the limited number of pins of an IC package, the multi-function CPU can not be employed, but instead a general-purpose CPU and large-scale adjacent circuits are used in combination.

Next, an example of the prior art multi-function CPU will be explained.

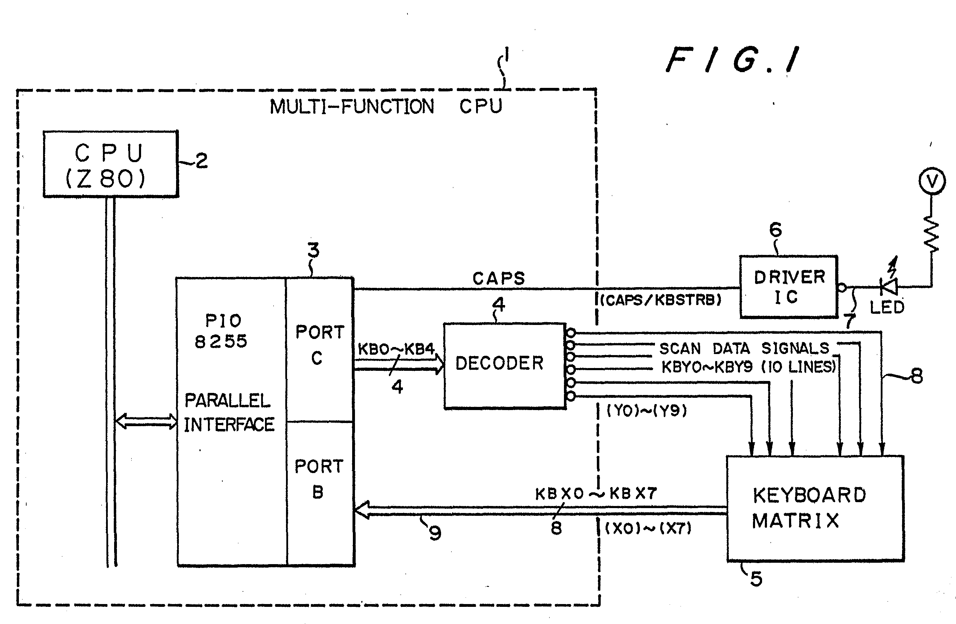

Specifically, Fig. 1 illustrates a conventional multi-function CPU and          keyboard, especially its keyboard interface circuit.

In Fig. 1, a multi-function CPU 1 is composed of a CPU (Z80) 2 and its adjacent circuits, and this multi-function CPU 1 includes a parallel interface (PIO 8255) 3 which is a part of the adjacent circuits. This parallel interface 3 is a kind of LSI and includes Ports B, C to be used for the keyboard and Port A to be used as another function. In other words, the port C of the parallel interface 3 is used as the keyboard scan data and LED drive data, while the Port B is used as a keyboard return line input port.

Decoder 4 serves to drive keyboard matrix scan lines KBY 0 - KBY 9 in accordance with scan signals KB 0 - KB 4 from Port C. Also, Driver IC 6 is used to drive LED 7 in accordance with a CAPS signal from Port C.

Keyboard 5 is arranged such that the scan lines of the keyboard 5 are in contact with associated return lines via key contacts (not shown), respectively. In other words, the ten scan lines thereof are arranged such that they go to "0" sequentially. When one of the scan lines is "0", if a contact corresponding to this scan line is being depressed, then a return line corresponding to the scan line becomes 0 so as to be able to detect the depression of the associated key contact.

In the above-mentioned prior art example, although the keyboard matrix 5 and LED driver IC 6 can be connected directly to the multi-function CPU 1, a total of 19 pins are necessary which includes 10 pins for scan data signals (outputs of Decoder 4), 8 pins for return signals KBX 0 - KBX 7, and a pin for the CAPS signal.

However, when, as mentioned above, as many as 19 pins are used in connecting the keyboard matrix 5 and LED driver IC 6 to the multi-function CPU 1, · if addition of another one or more functions is necessary, it is difficult to execute such addition due to the limited number of the pins.

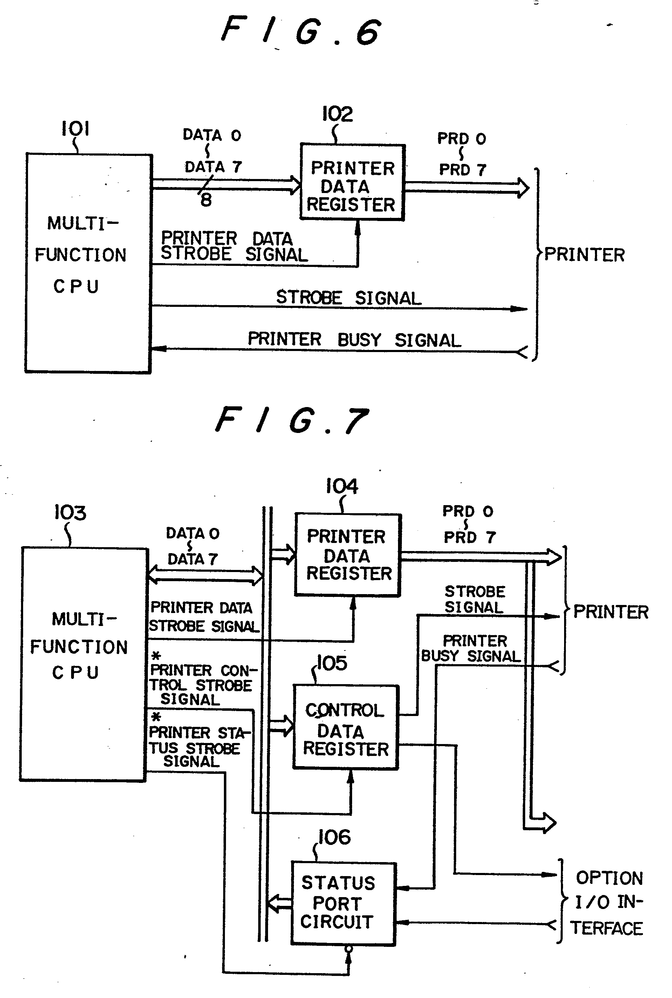

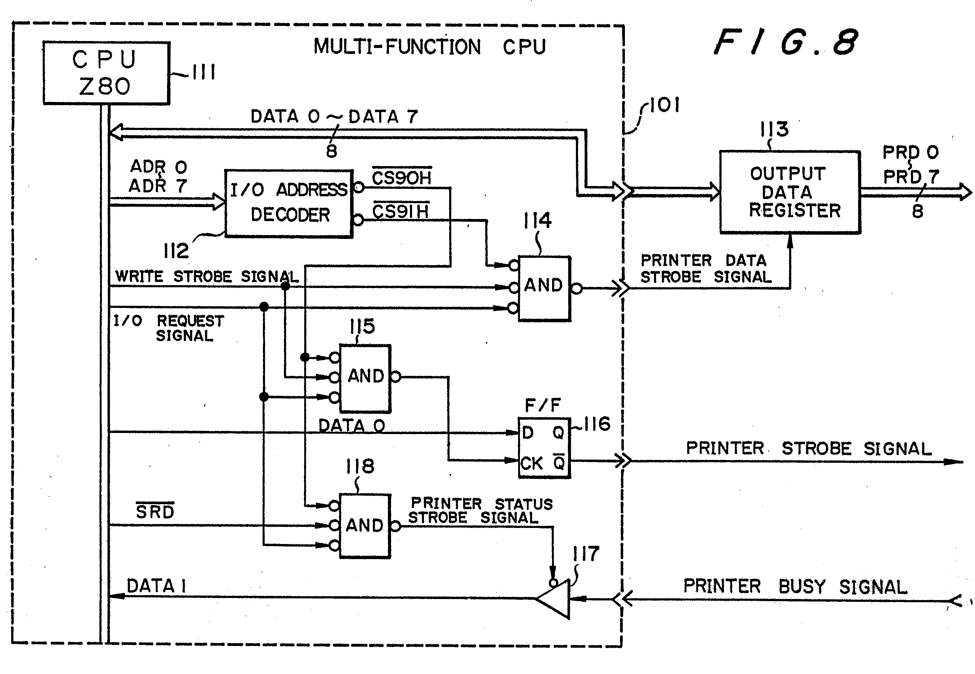

Now, Fig. 6 illustrates a block diagram of a printer parallel interface in the prior art, and Fig. 8 is a detailed block diagram of the above-mentioned prior art printer parallel interface.

In Fig. 6, a multi-function CPU 101 is used to output printer data to be supplied to data lines DATA 0 - DATA 7, printer data strobe signals for latching the priter data onto a printer data register 102, and strobe signals that are the output demand signals of the printer data PRD 0 - PRD 7, while

it is used to input printer busy signals that indicate yes/no as to reception of the printer data.

The above-mentioned data lines DATA 0 - DATA 7 are used in common with the signal lines of the memory interface so as to reduce the number of pins contained in one package. That is, these data lines DATA 0 - DATA 7 are used to output the print data thereon  to a printer as the printer data PRD 0 - PRD 7 after the print data is once set in Printer Data Register 102.

However, in the above-mentioned prior art,  -  if there is a request for addition of control signals, status signals or the like besides the strobe signals and printer busy signals, it is impossible to cope with such request.  That is, since the number of the pins is limited, there is a limit to increasing the functions of the multi-function CPU.

## SUMMARY OF THE INVENTION

The present invention aims at eliminating or reducing at least some of the drawbacks found in the above-mentioned prior art device.

Accordingly, it is  an  :  .  object of the invention to provide an improved keyboard interface in a multi-function CPU which permits a keyboard matrix and an LED driver IC to be connected to the multi-function CPU with a  reduced number of pins so as to increase the possible number of pins having different functions.

It is another object of the invention to provide an improved printer interface in a multi-function CPU which, by means of addition of a data register, permits the multi-function CPU to increase its functions under the limited number of pins when a printer is connected to the multi-function CPU.

It is still another object of the invention to provide an improved CPU interrupt control device which permits expansion of the functions of a multi-function CPU.

It is yet another object of the invention to provide an improved multi-function CPU which can be controlled systematically to prevent confusion when the functions of the multi-function CPU are further expanded sequentially.

To accomplish the foregoing objects, according to one aspect of the invention, in a multi-function CPU including a CPU and its adjacent circuits, a bidirectional bus line is used not only to output the scan data signal of the keyboard matrix but also to read out the return signal of the keyboard matrix.

According to another aspect of the invention, in a multi-function CPU including a CPU and its adjacent circuits, there is provided mode specifying means which specifies

a level mode using a level signal on a printer or a printer strobe mode using the level signal as a strobe signal.

According to still another aspect of the invention, said mode specification permits use of more pins having a plurality of different functions so as to provide spare pins, and there is provided a register having an interrupt request port to check the level status of the signals or the internal status of the multi-function CPU using such spare pins and a bit to prohibit or enable the above-mentioned interrupt.

According to yet another aspect of the invention, in a multi-function CPU including a CPU and its adjacent circuits, there is provided a port within said CPU which holds the ID number of LSIs.

The above and other related objects and features of the invention will be apparent from a reading of the following description in connection with the accompanying drawings, which show exemplary embodiments of the invention and in which:

Fig. 1 is a block diagram of a conventional multi-function CPU and its associated keyboard, especially illustrating its basic keyboard interface circuit;

Fig. 2 is a block diagram of an embodiment of the invention, especially illustrating an expansion keyboard interface thereof;

Fig. 3 is a time chart of the above embodiment of the invention;

Fig. 4 is a block diagram to illustrate how to select a basic keyboard interface function as shown in Fig. 1 or an expansion keyboard interface function as shown in Fig. 2;

Fig. 5 is a table to illustrate terminal functions in a basic mode or an expansion mode;

Fig. 6 is a block diagram of a printer parallel interface in the prior art;

Fig. 7 is a block diagram of an embodiment of the invention, especially illustrating an expansion printer parallel interface thereof;

Fig. 8 is a detailed block diagram of the printer parallel interface shown in Fig. 6;

Fig. 9 is a block diagram of the expansion printer parallel interface provided within a multi-function CPU as shown in Fig. 7;

Fig. 10 is a block diagram to illustrate how to switch a basic printer interface (an interface shown in Fig. 8) and an expansion printer interface (an interface shown in Fig. 9) therebetween;

Fig. 11 is a block diagram of an embodiment of the invention, especially illustrating registers and ports thereof for controlling the expansion function of the above multi-function CPU;

Fig. 12 is a schematic view to illustrate the formats and the functions of the respective bits as to an internal mode register and an internal status port as shown in Fig. 11; and

Fig. 13 is a schematic view to illustrate the formats and the functions of the respective bits of an interrupt status port and an interrupt control register as shown in Fig. 11.

For the avoidance of any doubt, it should be noted that each embodiment of the invention described hereinafter needs only one multi-function CPU. Each multi-function CPU needs only one CPU element, which performs several functions.

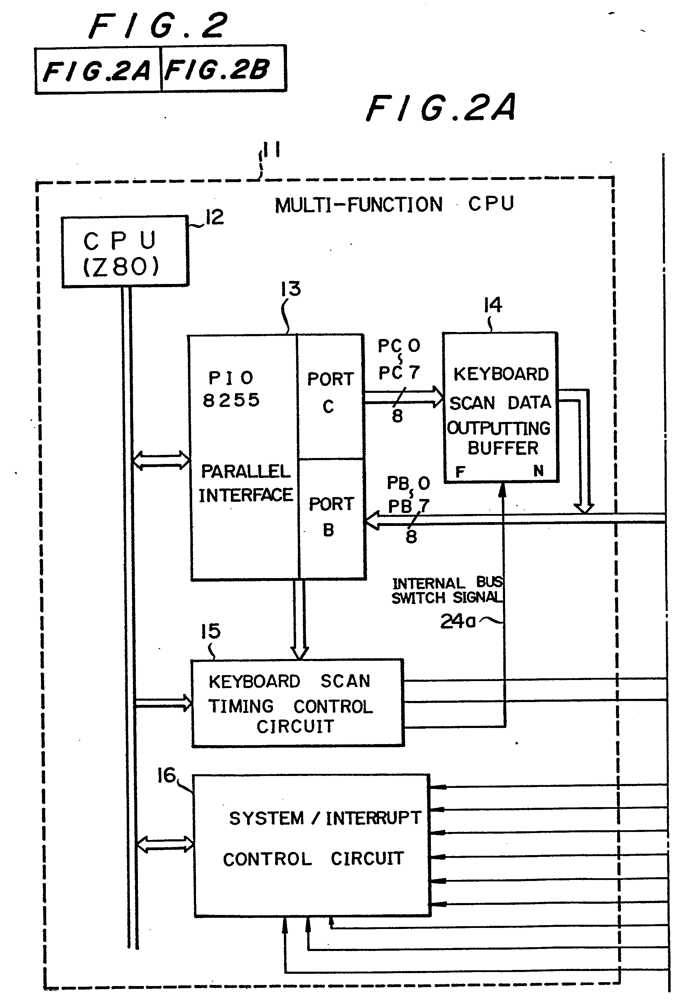

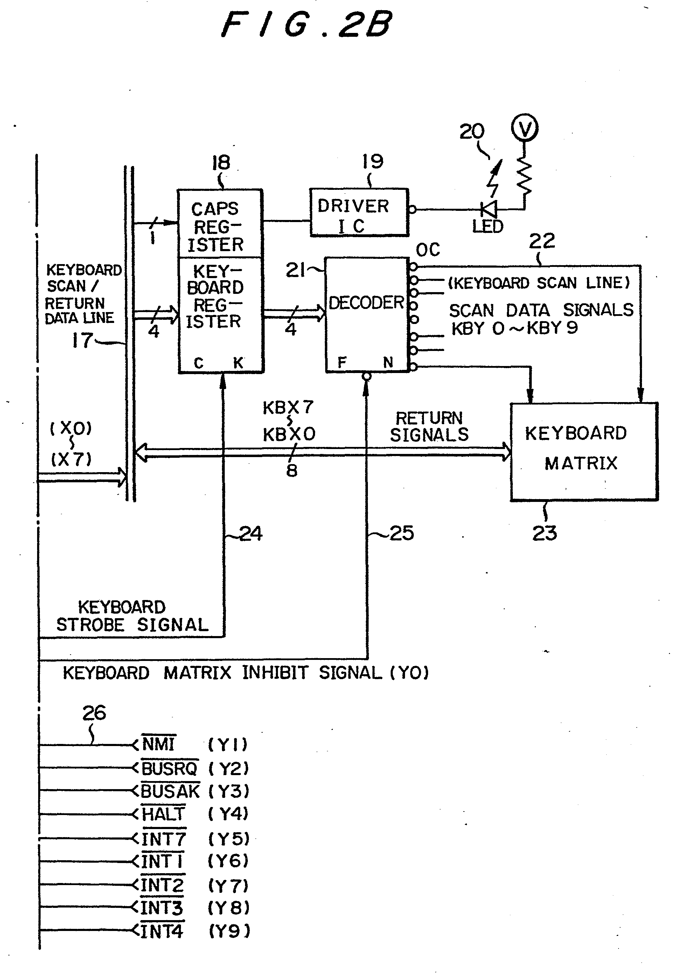

Fig. 2 illustrates in block form an embodiment of the invention, especially an expansion keyboard interface thereof.

In this Figure, a multi-function CPU 11 comprises a CPU (Z80) 12, a parallel interface (PIO 8255) 13, a keyboard scan data output buffer 14, a keyboard scan timing control circuit 15, and a system/interrupt control circuit 16.

A keyboard matrix inhibit signal 25 is used to inhibit a return signal, while an internal bus switch signal 24a is dedicated to bringing the output signals PC 0 – PC 7 of a port C on board data lines X 0 - X 7 respectively. A keyboard strobe signal 24 is used to set keyboard scan codes on keyboard scan/return data lines (X 0 - X 7) 17 into a CAPS/keyboard register 18. A driver IC 19 serves to drive an LED 20.

A decoder 21 is used to drive keyboard scan lines (KBY 0 - KBY 9) which scan a keyboard matrix 23. A system/interrupt control/status signal 26 is a signal that has newly become usable by means of expansion of the keyboard interface.

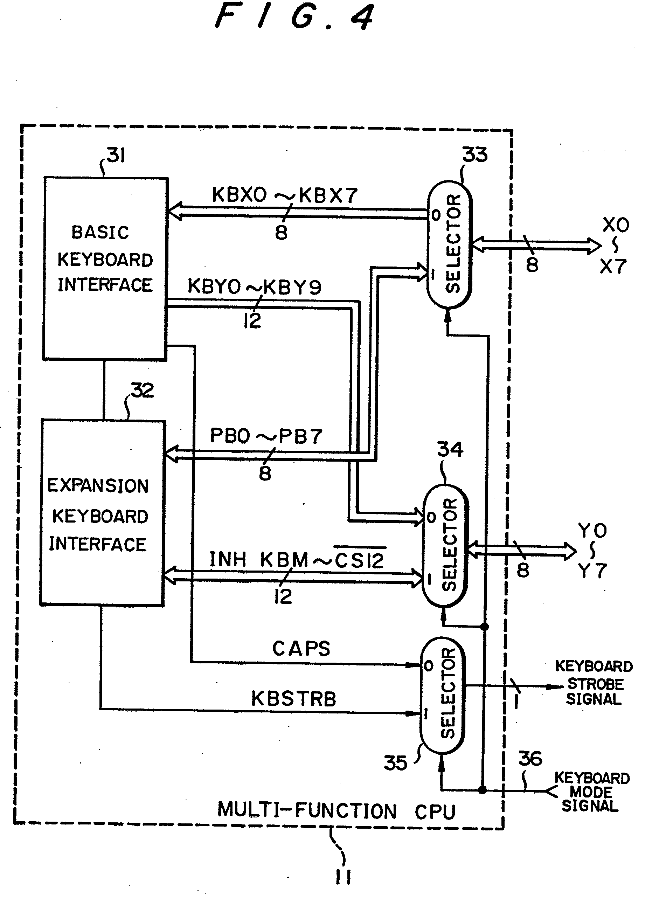

Fig. 4 is a block diagram to illustrate how to select a basic keyboard interface function 31 (as shown in Fig. 1) or an expansion keyboard interface function 32 (substantially as shown in Fig. 2). Thus, block 31 comprises elements 2, 3 and 4 of Fig. 1 (i.e. block 1) and block 32 comprises elements 13, 14, 15 and 16 of Fig. 2 (but not element 12 since the CPU is already present in block 31).

Signals from the basic keyboard interface function 31 and the expansion keyboard interface function 32 are respectively selected by selectors 33, 34 and 35, and are then outputted from multi-function CPU 11. It should be noted that selectors 33, 34 and 35 do not in reality form components of multi-function CPU 11 but are included in order to represent the real situation in a schematic, functionally accurate manner.

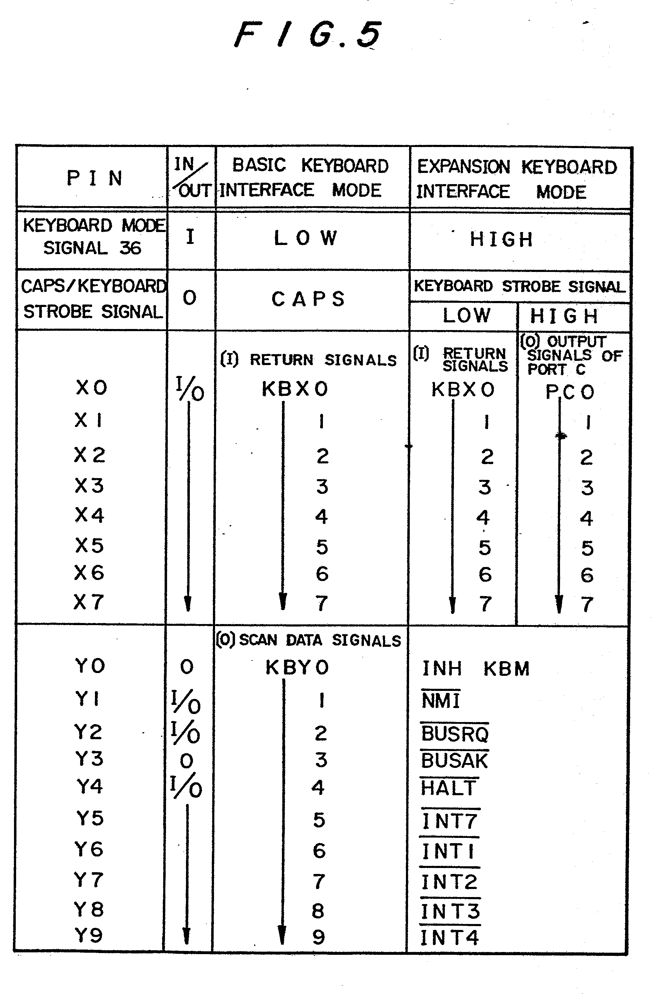

Fig. 5 is a table to illustrate the functions of terminals in the respective keyboard interface modes (that is, a basic mode or an expansion mode ).

Now, we will describe the operation of the above-mentioned keyboard interface.

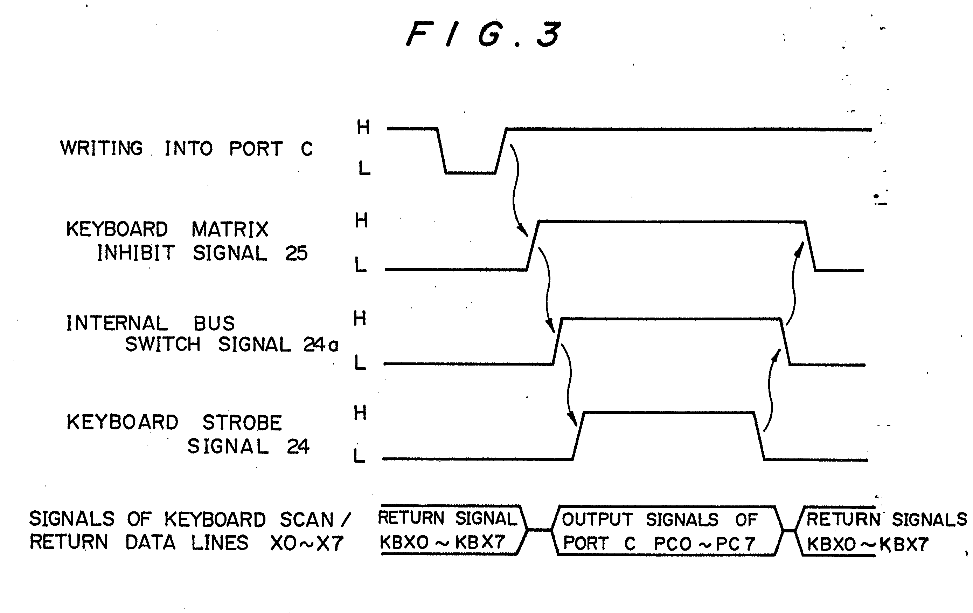

CPU (Z80) 12 shown in Fig. 2, first, writes a keyboard scan code and LED turn-on control data into Parallel Interface (PIO 8255) 13, or Port C thereof. Then, as shown in Fig. 3, when such writing into Port C is completed, then Keyboard Scan Timing Control Circuit 15 outputs a keyboard matrix inhibit signal 25. As a result of this, the return signals (KBX 0 - KBX 7) on the keyboard scan/return data lines (X 0 - X 7) 17 are inhibited, and thus the outputs PC 0 - PC 7 of the port C are outputted by means of the internal bus switch signal 24a.

A predetermined period of time after then, Keyboard Scan Timing Control Circuit 15 outputs the keyboard strobe signal 24 (that is, it goes to "HIGH"), so that the outputs PC 0 - PC 7 of the port C are output via Buffer 14 on Keyboard Scan/Return Data Lines (X 0 - X 7) 17.

On the other hand, if the keyboard strobe signal 24 goes to "HIGH", then the keyboard scan codes(4 bits) and LED turn-on control data (1 bit) that are output on Data Lines (X 0 - X 7) 17 are set in CAPS/Keyboard Register 18. And, if the keyboard mode signal goes back to "LOW" again, then Decoder 21 is enabled to decode the keyboard scan codes (4 bits) from Keyboard Register 18, thereby driving the ten keyboard scan lines (KBY 0 - KBY 9) 22.

Then, if an operator operates the keyboard, then the keyboard return data is output on Keyboard Return Lines KBX 0 - KBX 7, and the same keyboard return data is then input via Keyboard Scan/Return Data Lines (X 0 - X 7) into the port B of Parallel Interface 13.

. CPU (Z80) detects which of keys in the keyboard is depressed in accordance with the keyboard return data read out from Port B and the keyboard scan code written into Port C.

As mentioned above, the invention is provided with the expansion keyboard interface 32 besides the basic keyboard interface 31, whereby 9 system/interrupt control/status signals can be newly used as follows:

(1) Y1:  Forced Interrupt Request Signal (unmaskable);

(2) Y2:  Bus Request Signal (that is used to hold CPU Z80 and execute a DMA control.);

(3) Y3:  Bus Acknowledge Signal (that is used to hold CPU Z80 and execute a DMA control.);

(4) Y4:  CPU Stop Status Signal;

(5) Y5:  External Interrupt Request Signal Level 7;

(6) Y6:  External Interrupt Request Signal Level 1;

(7) Y7:  External Interrupt Request Signal Level 2;

(8) Y8:  External Interrupt Request Signal Level 3;

(9) Y9:  External Interrupt Request Signal Level 4.

Driver IC 19 controls and drives the turning-on of LED 20 indicating the CAPS lock status according to the output data
from CAPS Register 18.

As shown in Fig. 4, whether the basic keyboard interface
signal is to be output or whether the expansion keyboard
interface signal is to be output can be switched according
to a keyboard mode signal 36 generated from an external
source. In other words, when the keyboard mode signal 36 is
"LOW", Selectors 33, 34, and 35 select the basic keyboard
interface signal; and, when the keyboard mode signal 36 is
"HIGH", Selectors 33, 34, and 35 select the expansion keyboard
interface signal.

Accordingly, with the above embodiment of the invention,
in small-scale system, it is possible to use the basic keyboard interface mode in which the keyboard matrix can be directly connected without using any peripheral circuit elements,
while, in large-scale systems, by adding a small quantity of
adjacent  circuit elements, it is possible to employ the ex-
pansion keyboard interface mode in which the system/interrupt
control/status lines can also be used. Further, in case of
the above-mentioned large-scale systems, the number of terminals included in the associated multi-function CPU is equal
to that in the small-scale systems. Therefore, the invention
is advantageous in that the same multi-function CPU can be used in the small-scale system as well as in the large-scale system, alternatively.

Fig. 7 is a block diagram of an embodiment of the invention, especially illustrating an expansion printer parallel interface thereof.

In this Figure, a multi-function CPU 103 is arranged such that not only a printer data register 104 but also a control data register 105 and a status port circuit 106 are connected thereto. Thus, option I/O interfaces can also be connected to this multi-function CPU 103.

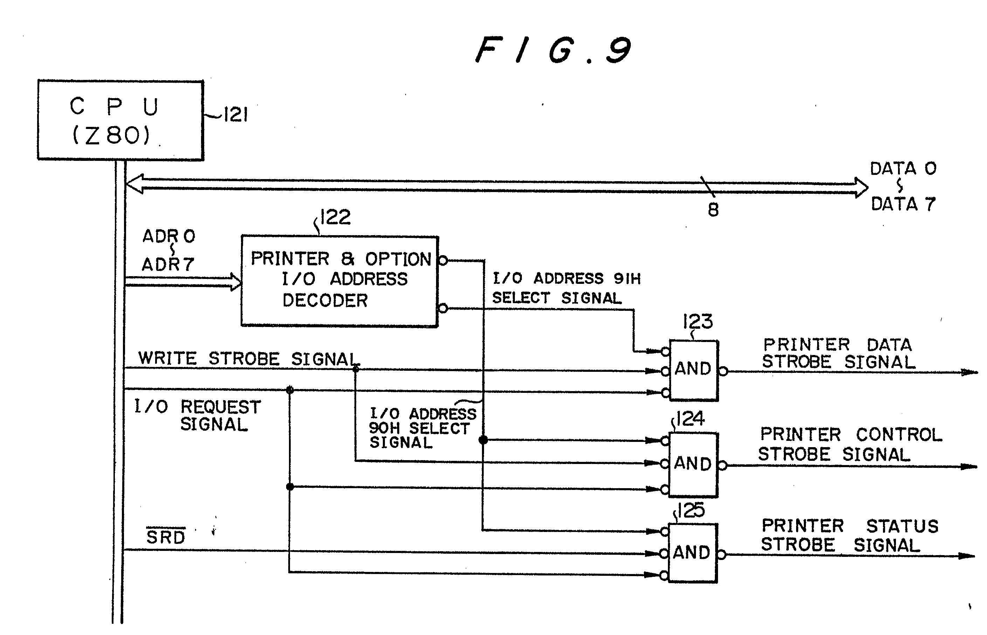

Fig. 9 is a block diagram of the expansion printer interface that is provided within the multi-function CPU 103 shown in Fig. 7. All elements of Fig. 9 are present in block 103 of Fig. 7.

In Fig. 9, there are included a CPU (Z80) 121, a printer and option I/O address decoder 122, an AND gate 123 to generate a printer data strobe signal, an AND gate 124 to generate a printer control strobe signal, and an AND gate 125 to generate a printer status strobe signal.

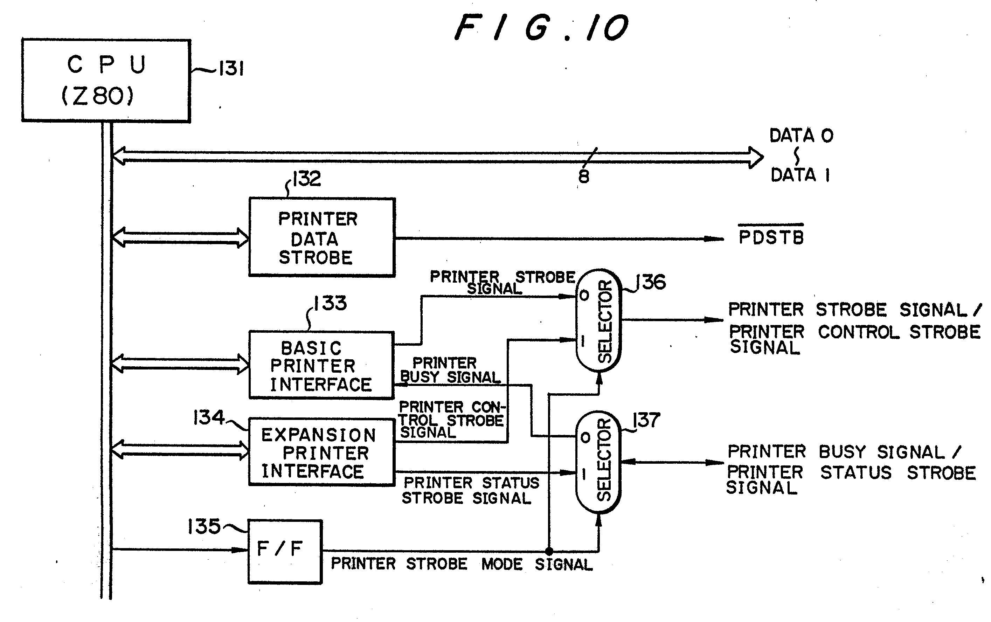

Fig. 10 is a block diagram to illustrate how to switch the basic printer interface (that is shown in Fig. 8)133 and the expansion printer interface (that is shown in Fig. 9) 134 therebetween. Interface 134 comprises elements 122, 123, 124 and 125, but not CPU 121. Interface 133 comprises elements 112, 114, 115, 116, 117 and 118 of Fig. 8 (but not CPU 111).

Signals from the respective printer interfaces 133, 134

0162231

are respectively selected by selectors 136, 137 and are then output from CPU (Z80) 131. Here, a flip-flop 135 is used to hold the information as to what these selectors 136, 137 have selected. Selectors 136 and 137, data strobe 132 and flip-flop 135 as well as CPU 131, and interfaces 133 and 134 are components of the multi-function CPU.

Next, we will describe the operation of the above-mentioned embodiment of the invention.

Referring to Fig. 7, Multi-function CPU 103 first outputs print data on Data Lines DATA 0 - DATA 7 and generates a printer data strobe signal. The printer data strobe signal causes the print data to be set in Printer Data Register 104. As a result of this, printer data control data is outputted on Data Lines DATA 0 - DATA 7 and a printer control strobe signal is generated.

Also, the above-mentioned printer control strobe signal causes the printer data control data to be set in Control Data Register 105 and then to be output as a strobe to a printer therefrom. The printer picks up the print data on Printer Data Lines PRD 0 - PRD 7 in accordance with the strobe signal.

On the other hand, the printer outputs on the printer busy signal line a status indicating whether the print data is acceptable or not.

Multi-function CPU 103 generates a printer status strobe signal so that it can read the busy status from the printer via Status Port Circuit 106 and Data Lines DATA 0 - DATA 7.

Control Data Register 105 can be provided with up to 8 bits. One of these bits is to be used as a strobe signal in the printer interface, while other 7 bits can be used to control the option I/O interfaces.

Also, one bit of Status Port Circuit 106 is used as the printer busy signal in the printer interface, while the remaining 7 bits thereof are used as data or status input ports of the option I/O interfaces.

Referring again to Fig. 9, there is illustrated a block diagram of the expansion printer interface of the invention, in particular, a circuit to generate the respective strobe signals.

In Fig. 9, when generating the printer data strobe signal, CPU (Z80) 121 outputs I/O Address 91H(H represents a hexadecimal code) on Address Lines ADR 0 - ADR 7, and also outputs a write strobe signal and an I/O request signal.

I/O Address Decoder 122 decodes addresses and generates I/O Address 91H Select Signal. AND Gate 123 ANDs the I/O request signals and generates the printer data strobe signal. The printer strobe signal and the printer status strobe signal can also be generated in the same procedure as mentioned above.

As shown in Fig. 10, whether the basic printer interface signal is to be used or whether the expansion printer interface signal is to be used can be switched by Flip-Flop 135 which holds the printer interface selection information.

In other words, when the printer strobe mode signal that is the output of Flip-Flop 135 is "LOW", the printer strobe signal of the basic printer interface is selected and output by Selector 136, and the printer busy signal is selected by Selector 137 and is transmitted to the basic printer interface.

On the other hand, when the printer strobe mode signal is "HIGH", Selector 136 selects and outputs the printer control strobe signal of the expansion printer interface 134, and at the same time Selector 137 selects and outputs the printer status strobe signal.

The above-mentioned flip-flop 135 can be freely controlled by CPU (Z80) 131, or it can be freely set/reset.

Accordingly, in the small-scale systems, according to the above-mentioned embodiment of the invention, simply by adding the printer data register 104 shown in Fig. 7, it is possible to employ the basic printer interface mode which permits connection of the printer thereto.

In the large-scale systems requiring the option I/O interfaces, the same embodiment of the invention is advantageous in that it can employ the expansion printer interface mode by adding the control data register 105 and the status port 106 thereto.

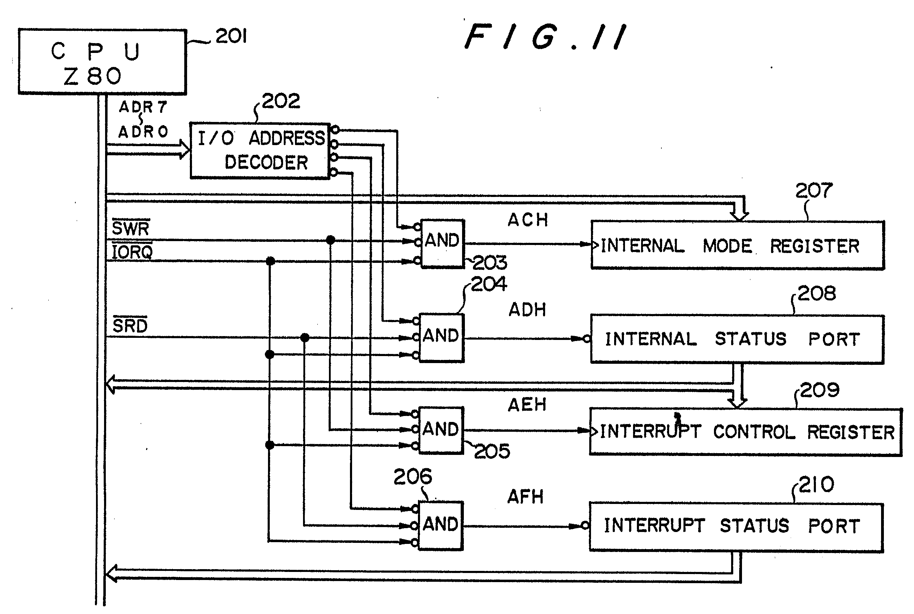

Now, Fig. 11 is a block diagram of an embodiment of the invention, in particular illustrating registers and ports to control the expansion functions of a multi-function CPU. The embodiment of Fig. 11 is a development of the embodiment of Fig. 10, etc.

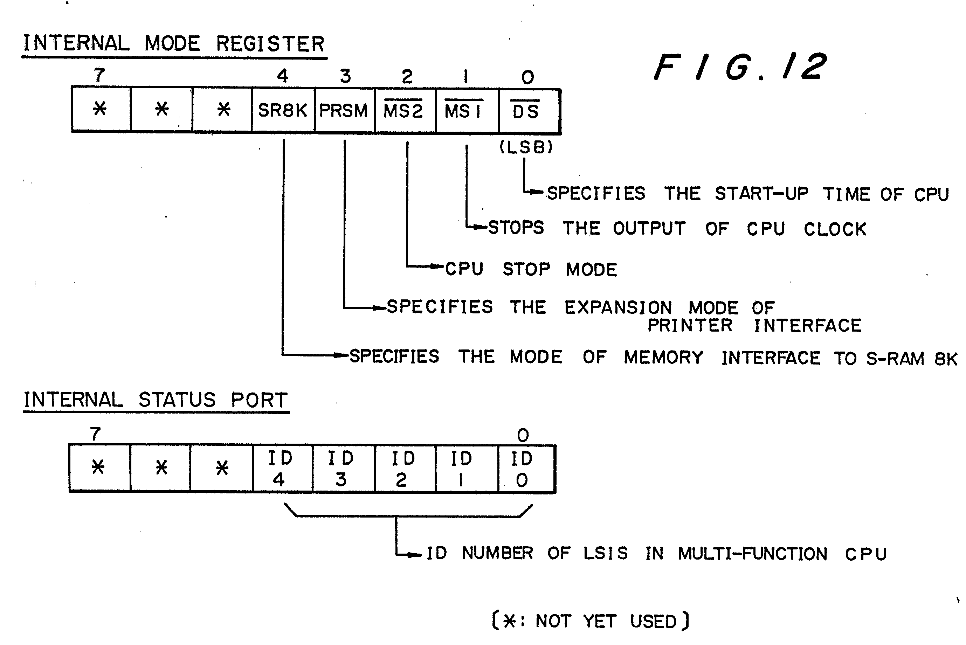

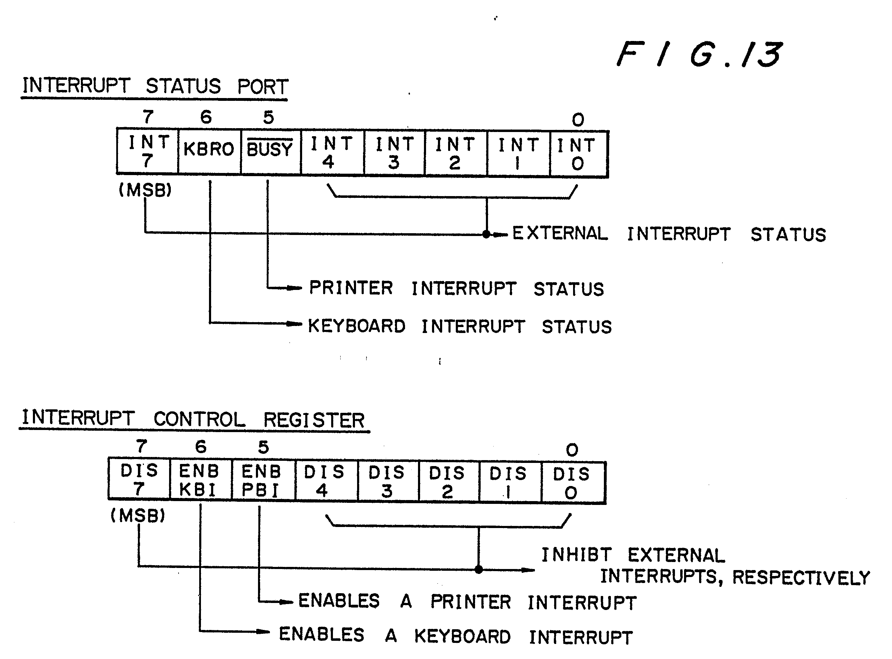

Figs. 12 and 13 are views to illustrate the formats and the respective bit functions of the above-mentioned registers and ports.

Next, in connection with Figs. 11 - 13, we will describe the expansion functions of the multi-function CPU as well as the control procedures of adjacent circuits incorporated in the same multi-function CPU.

The multi-function CPU comprises an internal mode register 207, an internal status port 208, an interrupt control register 209, and an interrupt status port 210, while CPU (Z80) 201 uses them to control its expansion functions and adjacent circuits.

Address signals on Address Lines ADR 0 - ADR 7 outputted from CPU (Z80) 201 are decoded by I/O Address Decoder 202 so that the select signals of the respective registers/ports 207, 208, 209 and 210 are output.

AND Gates 203 - 206 respectively generate their respective register/port strobe signals to set the output data on the associated data line into the respective register or to read out the status port data onto the associated data line.

Fig. 12 illustrates the functions of the respective bits in the internal mode register 207 shown in Fig. 11, details of which are as follows:

Bit 0: it is input to the DS terminal(terminal for Bit 0) of a clock generator(T6497) for CPU (Z80) to specify a start-up time;

Bit 1: it is input to the MS 1 terminal (terminal for Bit1) of a clock generator (T6497) for CPU (Z80) to stop the output of the clock;

Bit 2: it is input to the MS 2 terminal (terminal for Bit 2) of a clock generator (T6497) for CPU (Z80) to specify a stop mode;

Here, it should be noted that the above-mentioned clock generator (T6497) is incorporated in Multi-function CPU 201 as one element of the adjacent circuits of CPU (Z80).

CPU (Z80) 201 is able to read out the ID number of LSIs from the internal status port 208 shown in Fig. 11. Although even in the multi-function CPU using CPU (Z80) 201 the adjacent circuits to be incorporated therein are different according to its applications, if the ID number is changed, then the kind of use of the multi-function CPU can be noticed to its associated software. That is, when the use of the LSI is changed (or, when the LSI is versioned up), the ID number is changed to ensure to identify the use of the LSI.

Bit 3: it is used to specify the printer interface into the expansion mode;

This corresponds to the printer interface flip-flop 135 explained in connection with Fig. 10.

Bit 4: it is used to specify the memory interface mode into an SRAM - 8K;

This bit is used to select which of SRAM - 2K or SRAM - 8K is to be used.

Fig. 13 is a view to illustrate the functions of the respective bits in the interrupt control register 209 as well as the functions of the respective bits in the interrupt status port 210 shown in Fig. 11.

Since CPU (Z80) 201 is provided with only one INT interrupt terminal, its adjacent circuits are used to expand the interrupt request signal up to 8 levels. In other words, Interrupt Control Register 209 shown in Fig. 11 controls the enable/disable of the expansion interrupt requesting signal, while CPU (Z80) 201 can use the interrupt status port 210 to check which of the expansion interrupt requests has occurred.

In Fig. 13, "Bit 5" is used as an interrupt status for the printer interface, and "Bit 6" is used as an interrupt status for the keyboard interface.

INT 1 - INT 4 and INT 7 are respectively interrupt requests supplied from sources which are provided externally of the multi-function CPU, and they are effective when the keyboard interface is used in the expansion mode.

Namely, the interrupt status port is enabled for interruption only when the respective bits are "1", while the interrupt control register is disabled for interruption only when the respective bits are "1".

In other words, immediately after the power supply is put to work, the respective bits of the interrupt status port become "0", and thus any interrupt is then disallowed. At that time, the respective bits of the interrupt control register also become "0" and thus any interrupt is allowed. After then, when it is desired to cause an interrupt, the respective bits of the interrupt status port may be "1" in accordance with the associated program;and, when it is desired to disable an interrupt, the respective bits of the interrupt control register may be "1" according to the program.

As described above, the last-mentioned embodiment of the invention comprises the port that is used to request an interrupt to check the signal for its pin status or the CPU for its internal status and the register that is equipped with the bits for disabling or enabling such interrupt. It should be noted that this register may be provided externally or internally of the multi-function CPU.

Accordingly, the present invention has an advantage that when a keyboard matrix and an LED driver IC are connected to a multi-function CPU, the number of pins can be reduced to its minimum and, as a result of this, pins having another functions can be added thereto.

The present invention has another advantage that, by adding a printer data register thereto, when a printer is connected, the functions of the multi-function CPU can be further increased under the limited number of the pins.

Also, the present invention is further advantageous in that the functions of the multi-function CPU can be further expanded.

Claims:

1.  A keyboard interface for a multi-function CPU (11) including a CPU (12) and its adjacent circuits (13,14, 15,16), characterised in that said keyboard interface uses a bi-directional bus line (17) to output a scan data signal of a keyboard matrix (23) as well as to read out a return signal of said keyboard matrix (23) (e.g. Fig. 2).

2.  A keyboard interface as defined in claim 1, characterised in that said keyboard interface writes said scan data signal, thereafter inhibits the output of said return signal by means of an internal bus switch signal (24a) to output said scan data signal, and outputs a keyboard strobe signal (24) a predetermined time afterwards to read out said return signal.

3.  A keyboard interface as defined in claim 1 or 2 characterised in that said multi-function CPU (11) incorporates an expansion interface function (32) and a basic interface function (31) therein and is able to switch said two functions therebetween by means of mode specification means (36).

4.  A printer interface for a multi-function CPU (103) including a CPU (121) and its peripheral circuits, characterised in that said printer interface is provided with mode specification means (135) to specify one of a level mode using a level signal on a printer and a printer strobe mode using said level signal as a strobe signal (e.g. Fig. 7 and Fig. 10).

5. A CPU interrupt control device, characterised by a port (210) for requesting an interrupt to check an input signal for its level status or multi-function CPU for its internal status and by a register (209) having a bit therein for disabling or enabling said interrupt request (e.g. Fig. 11).

6. The CPU interrupt control device as defined in claim 5, characterised in that said register is provided in a multi-function CPU including a CPU (201) and its adjacent circuits.

7. A multi-function CPU including a CPU (201) and its adjacent circuits, characterised by a port (208) for holding the ID number of LSIs provided therein (e.g. Fig. 11).

8. A multi-function CPU characterised by an interface according to any one of claims 1 to 4.

FIG.1

MULTI-FUNCTION CPU

CPU (Z80) — 2

PIO 8255 — 3

PORT C

PORT B

PARALLEL INTERFACE

KB0~KB4 — 4

DECODER — 4

CAPS

(CAPS/KBSTRB)

DRIVER IC — 6

LED — 7

V

SCAN DATA SIGNALS
KBY0~KBY9 (10 LINES) — 8

(Y0)~(Y9)

KEYBOARD MATRIX — 5

KBX0~KBX7 — 8

(X0)~(X7) — 9

1/13

0162231

# FIG. 2

| FIG.2A | FIG.2B |
|--------|--------|

## FIG.2A

11

MULTI-FUNCTION CPU

CPU (Z80) 12

PIO 8255 PARALLEL INTERFACE 13

PORT C

PORT B

PC 0 ~ PC 7 8

PB 0 ~ PB 7 8

KEYBOARD SCAN DATA OUTPUTTING BUFFER 14

F    N

INTERNAL BUS SWITCH SIGNAL 24a

KEYBOARD SCAN TIMING CONTROL CIRCUIT 15

SYSTEM / INTERRUPT CONTROL CIRCUIT 16

# F I G . 2B

# F I G . 3

WRITING INTO PORT C — H / L

KEYBOARD MATRIX INHIBIT SIGNAL 25 — H / L

INTERNAL BUS SWITCH SIGNAL 24a — H / L

KEYBOARD STROBE SIGNAL 24 — H / L

SIGNALS OF KEYBOARD SCAN / RETURN DATA LINES XO~X7

RETURN SIGNAL KBXO ~ KBX7 | OUTPUT SIGNALS OF PORT C PCO ~ PC7 | RETURN SIGNALS KBXO~KBX7

# F I G . 4

BASIC KEYBOARD INTERFACE — 31

KBX0 ~ KBX7 / 8 → SELECTOR 33 → X0 ~ X7 / 8

KBY0 ~ KBY9 / 12

EXPANSION KEYBOARD INTERFACE — 32

PB0 ~ PB7 / 8

INH KBM ~ $\overline{CS12}$ / 12 → SELECTOR 34 → Y0 ~ Y7 / 8

CAPS → SELECTOR 35

KBSTRB → KEYBOARD STROBE SIGNAL

36 — KEYBOARD MODE SIGNAL

MULTI-FUNCTION CPU — 11

# F I G. 5

| PIN | IN/OUT | BASIC KEYBOARD INTERFACE MODE | EXPANSION KEYBOARD INTERFACE MODE | |
|---|---|---|---|---|
| KEYBOARD MODE SIGNAL 36 | I | LOW | HIGH | |
| CAPS/KEYBOARD STROBE SIGNAL | O | CAPS | KEYBOARD STROBE SIGNAL | |
| | | | LOW | HIGH |
| | | (I) RETURN SIGNALS | (I) RETURN SIGNALS | (O) OUTPUT SIGNALS OF PORT C |
| X0 | I/O | KBX0 | KBX0 | PC0 |
| X1 | | 1 | 1 | 1 |
| X2 | | 2 | 2 | 2 |
| X3 | | 3 | 3 | 3 |
| X4 | | 4 | 4 | 4 |
| X5 | | 5 | 5 | 5 |
| X6 | | 6 | 6 | 6 |
| X7 | | 7 | 7 | 7 |
| | | (O) SCAN DATA SIGNALS | | |
| Y0 | O | KBY0 | INH KBM | |
| Y1 | I/O | 1 | $\overline{NMI}$ | |
| Y2 | I/O | 2 | $\overline{BUSRQ}$ | |
| Y3 | O | 3 | $\overline{BUSAK}$ | |
| Y4 | I/O | 4 | $\overline{HALT}$ | |
| Y5 | | 5 | $\overline{INT7}$ | |
| Y6 | | 6 | $\overline{INT1}$ | |
| Y7 | | 7 | $\overline{INT2}$ | |
| Y8 | | 8 | $\overline{INT3}$ | |
| Y9 | | 9 | $\overline{INT4}$ | |

# F I G . 6

# F I G . 7

# FIG.8

MULTI-FUNCTION CPU — 101

CPU Z80 — 111

DATA 0 ~ DATA 7 — 8

ADR 0 ~ ADR 7

I/O ADDRESS DECODER — 112

WRITE STROBE SIGNAL

I/O REQUEST SIGNAL

CS90H

CS91H

OUTPUT DATA REGISTER — 113

PRD 0 ~ PRD 7 — 8

PRINTER DATA STROBE SIGNAL

AND — 114

AND — 115

F/F — 116
D Q
CK Q̄

DATA 0

AND — 118

SRD

DATA 1

PRINTER STATUS STROBE SIGNAL

117

PRINTER STROBE SIGNAL

PRINTER BUSY SIGNAL

# F I G . 9

CPU (Z80) ~121

DATA 0 ⌇ DATA 7

8

ADR 0 ⌇ ADR 7

PRINTER & OPTION I/O ADDRESS DECODER ~122

I/O ADDRESS 91H SELECT SIGNAL

123

AND → PRINTER DATA STROBE SIGNAL

WRITE STROBE SIGNAL

I/O REQUEST SIGNAL

I/O ADDRESS 90H SELECT SIGNAL

124

AND → PRINTER CONTROL STROBE SIGNAL

$\overline{SRD}$

125

AND → PRINTER STATUS STROBE SIGNAL

FIG.10

FIG.11

11/13

0162231

## INTERNAL MODE REGISTER

# F I G. 12

| 7 | | | 4 | 3 | 2 | 1 | 0 |
|---|---|---|------|------|----------------|----------------|----------------|
| * | * | * | SR8K | PRSM | $\overline{MS2}$ | $\overline{MS1}$ | $\overline{DS}$ |

(LSB)

→SPECIFIES THE START-UP TIME OF CPU

→STOPS THE OUTPUT OF CPU CLOCK

→CPU STOP MODE

→SPECIFIES THE EXPANSION MODE OF PRINTER INTERFACE

→SPECIFIES THE MODE OF MEMORY INTERFACE TO S-RAM 8K

## INTERNAL STATUS PORT

| 7 | | | | | | | 0 |
|---|---|---|------|------|------|------|------|
| * | * | * | ID 4 | ID 3 | ID 2 | ID 1 | ID 0 |

→ID NUMBER OF LSIS IN MULTI-FUNCTION CPU

(*: NOT YET USED)

$FIG.13$

**INTERRUPT STATUS PORT**

| 7 | 6 | 5 | | | | | 0 |
|---|---|---|---|---|---|---|---|
| INT 7 | KBRO | BUSY | INT 4 | INT 3 | INT 2 | INT 1 | INT 0 |

(MSB)

EXTERNAL INTERRUPT STATUS

PRINTER INTERRUPT STATUS

KEYBOARD INTERRUPT STATUS

**INTERRUPT CONTROL REGISTER**

| 7 | 6 | 5 | | | | | 0 |
|---|---|---|---|---|---|---|---|
| DIS 7 | ENB KBI | ENB PBI | DIS 4 | DIS 3 | DIS 2 | DIS 1 | DIS 0 |

(MSB)

INHIBT EXTERNAL INTERRUPTS, RESPECTIVELY

ENABLES A PRINTER INTERRUPT

ENABLES A KEYBOARD INTERRUPT

0162231